Europäisches Patentamt

(19) European Patent Office

Office européen des brevets

(11) Veröffentlichungsnumme· **0 140 151**

**A2**

(12) **EUROPÄISCHE PATENTANMELDUNG**

(21) Anmeldenummer: **84111332.7**

(51) Int. Cl.⁴: **A 01 G 9/22**

(22) Anmeldetag: **22.09.84**

(30) Priorität: **24.09.83 DE 3334658**

(43) Veröffentlichungstag der Anmeldung:
**08.05.85 Patentblatt 85/19**

(84) Benannte Vertragsstaaten:
**AT BE CH FR GB IT LI LU NL**

(71) Anmelder: **J. H. Benecke GmbH**
**Beneckeallee 40**
**D-3000 Hannover 21(DE)**

(72) Erfinder: **Gefken, Kurt**
**August-Bebel-Strasse 61**
**D-3150 Peine-Essinghausen(DE)**

(72) Erfinder: **Labitzke, Ekkehard**
**Am Bandsbusch 64**
**D-4010 Hilden(DE)**

(74) Vertreter: **Leine, Sigurd, Dipl.-Ing. et al,**
**LEINE & KÖNIG Patentanwälte Burckhardtstrasse 1**
**D-3000 Hannover 1(DE)**

(54) Vorrichtung zur veränderbaren Schattierung eines Gewächshauses.

(57) Eine Vorrichtung zur veränderbaren Schattierung eines Gewächshauses weist eine zickzackförmig gefaltete, wenigstens halbsteife Folie auf, die an ihren Rändern in jedem zwischen zwei aufeinanderfolgenden Falzen liegenden Streifen Löcher aufweist, die nach Zusammenschieben der Folie zu einem Paket miteinander fluchten und durch die Drähte verlaufen, die nach Spannen unterhalb eines Daches eines Gewächshauses die gefaltete Folie verschiebbar halten und führen. Die Vorrichtung ist einfach zu bedienen. Mit ihr lassen sich große Flächen überspannen und die Behinderung des Lichteinfalls im zusammengezogenen Zustand ist äußerst gering.

FIG. 1

EP 0 140 151 A2

LEINE & KÖNIG

PATENTANWÄLTE

0140151

Dipl.-Ing. Sigurd Leine   Dipl.-Phys. Dr. Norbert König

Burckhardtstraße 1          Telefon (0511) 62 30 05
D-3000 Hannover 1

Unser Zeichen              Datum

J. H. Benecke GmbH                670/19EP   19.September 1984

Vorrichtung zur veränderbaren Schattierung
eines Gewächshauses

Die Erfindung betrifft eine Vorrichtung zur veränderbaren Schattierung eines Gewächshauses.

Es ist bekannt, zur Verminderung der Sonneneinstrahlung das Glasdach eines Gewächshauses mit weißer Farbe zu bestreichen. Dies ist aufwendig und hat den Nachteil, daß die Lichtminderung, also die Schattenbildung, nicht veränderbar ist.

Zur Veränderung der Schattierung ist es auch bekannt, das Dach eines Gewächshauses mit einer Plane abzudecken. Dies ist jedoch arbeitsaufwendig, und es ergeben sich insbesondere Schwierigkeiten bei dem Zusammenlegen der Plane.

Schließlich ist es bekannt, Bahnen aus flexiblem Gewebe zu verwenden, das aufgerollt oder zusammengeschoben wird. Die mit solchen Bahnen zu überspannenden Flächen sind jedoch gering, weil die Bahnen durchhängen. Außerdem ergeben sich Schwierigkeiten beim Aufrollen, da die Bahnen auf dem Wickel seitlich verlaufen können.

Der Erfindung liegt die Aufgabe zugrunde, eine Vorrichtung zur veränderbaren Schattierung eines Gewächshauses zu schaffen, die die Nachteile der bekannten Vorrichtungen vermeidet, bei der also die Änderung der Schattierung in einfacher Weise vorzunehmen ist, bei der große Flächen überdeckt werden können und bei der die im nichtabgedeckten Zustand eingenommene Fläche sehr gering ist.

Die der Erfindung zugrundeliegende Aufgabe wird durch die im Kennzeichen des Patentanspruchs 1 angegebene Lehre gelöst. Diese Lösung stellt im Prinzip eine ziehharmonikaförmige Anordnung dar, die im ausgezogenen Zustand eine sehr große Fläche überdeckt, die nicht viel geringer ist als die Gesamtfläche der zickzackförmig gefalteten Folie. Im zusammengeschobenen Zustand ergibt sich ein Paket, das eine äußerst geringe Fläche einnimmt und dadurch den Lichteinfall kaum behindert. Dies ist ein besonderer Vorteil unter Berücksichtigung der Gartenbauregel, daß 1 % mehr Licht auch 1 % mehr Ernte ergibt.

Ein weiterer Vorteil der zickzackförmigen und damit ziehharmonikaförmigen Ausbildung der Folie besteht darin, daß durch die Zickzackform ein Profil gebildet wird, das zu einer Steifigkeit führt, die eine Anordnung der Vorrichtung sogar in horizontaler Lage ermöglicht. Die erfindungsgemäße Vorrichtung kann daher quer zur Neigung eines Daches eines Gewächshauses angeordnet werden, wobei die Falze in Neigungsrichtung des Daches verlaufen. Dabei lassen sich in Neigungsrichtung des Daches ohne Schwierigkeiten Entfernungen von 5 m oder mehr überbrücken. Die Ausdehnung der Überdeckung quer zu den Falzen kann dabei ohne weiteres 10 m oder mehr betragen. Es ist ohne weiteres möglich, die Ausdehnungen beliebig zu vergrößern, indem mehrere zickzackförmig gefaltete Folien neben- und hintereinander angeordnet werden, die sich an den Rändern etwas überlappen.

Zweckmäßig ist die Verwendung eines halbsteifen Faservlieses für die Folie. Dies ist leicht bei gleichzeitig ausreichender Steifigkeit.

Zur Veränderung der Lichtdurchlässigkeit und damit der Schattierung ist es zweckmäßig, wenn die Folie ein Muster von feinverteilten Stellen aufweist, an denen die Lichtdurchlässigkeit größer ist als in den Bereichen außerhalb der Stellen. Dies kann z.B. durch eine entsprechende Farbgebung, aber auch in besonders zweckmäßiger Weise durch Perforationen erzielt werden, die gleichzeitig zu einer Luftdurchlässigkeit führen.

Zum Auseinanderziehen der zickzackförmig gefalteten Folie ist es lediglich erforderlich, an einem parallel zu den Falzen verlaufenden Rand zu ziehen. Um dabei jedoch Verformungen auszuschließen, ist es zweckmäßig, wenn dieser Rand eine steife Schiene aufweist, so daß Zugkräfte gleichmäßig auf den gesamten Rand verteilt werden. Das Ziehen kann im einfachsten Fall von Hand erfolgen, jedoch ist es auch zweckmäßig, Zugfäden vorzusehen, die an dem zu verschiebenden Rand angreifen und zweckmäßigerweise ebenfalls durch die Löcher verlaufen, durch die auch die Drähte zur Führung der Vorrichtung verlaufen.

Anhand eines in der Zeichnung dargestellten Ausführungsbeispiels soll die Erfindung näher erläutert werden.

Fig. 1 zeigt ein Ausführungsbeispiel in der Seitenansicht und

Fig. 2 zeigt eine Draufsicht.

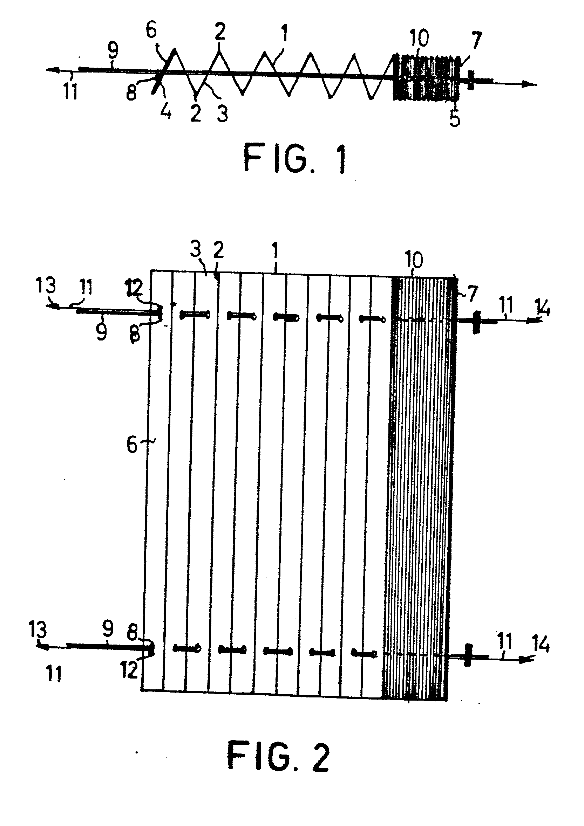

Die in den Fig. 1 und gezeigte Vorrichtung weist eine Folie 1 auf, die aus halbsteifem Kunststoffaservlies besteht, in dem sich feinverteilt, beispielsweise in Form eines Rechteckmusters, mit einem Abstand von 1,5 mm dünne oder perforierte Stellen befinden. Die Folie ist zickzackförmig gefaltet, so daß zwischen Falzen 2 Streifen 3 von 5 cm Breite gebildet sind. An den äußersten Rändern verlaufende Streifen 4 und 5 sind durch Schienen 6 und 7 verstärkt.

Wie insbesondere aus Fig. 2 zu ersehen ist, weisen die Streifen 3, 4 und 5 wie auch die Schienen 6 und 7 Löcher auf, die in der Mitte der Breite der Streifen im seitlichen Randbereich der Folie 1 liegen und so miteinander fluchten, wenn in der dargestellten Weise ein gespannter Draht 9 durch die Löcher gezogen ist. Auf diese Weise ergibt sich ein glattes Paket 10, wenn die Streifen 3 zusammengeschoben sind, was in der rechten Seite der Zeichnungen gezeigt ist. Die Drähte 9 lassen sich horizontal unterhalb eines Daches eines Gewächshauses spannen, wobei ein Durchhängen der Folie 1 durch das zickzackförmige Profil der Streifen 3 und Falze 2 vermieden ist. Durch die Löcher 8 verlaufen außerdem Zugfäden 11, die jeweils an der Schiene 6 an Stellen 12 fixiert sind. Durch Ziehen an den Fäden 11 in Richtung von Pfeilen 13 läßt sich die Schiene 6 in der Zeichnung nach links bewegen und damit die Folie 1 auseinanderziehen. Durch Ziehen an den Fäden 11 in Richtung von Pfeilen 14 läßt sich die Schiene 6 in der Zeichnung wieder nach rechts schieben, so daß die Folie 1 wieder zusammengeschoben wird und ein Paket 10 bildet.

Bei einer Länge der Folie 1 in Richtung quer zu den Falzen 2 von 10 m läßt sich die Vorrichtung etwa bis zu einer Länge von 7 m ausziehen, ohne daß dadurch die Profilwirkung der Zickzackfaltung verlorengeht. Im zusammengeschobenen Zustand beträgt dabei die Dicke des Pakets 10 lediglich etwa 10 cm, wodurch der Lichteinfall praktisch nicht behindert wird.

Dipl.-Ing. Sigurd Leine  Dipl.-Phys. Dr. Norbert König

Burckhardtstraße 1          Telefon (05 11) 62 30 05
D-3000 Hannover 1

Unser Zeichen              Datum

J. H. Benecke GmbH                    670/19EP 19. September 1984

A n s p r ü c h e :

1. Vorrichtung zur veränderbaren Schattierung eines Gewächshauses, g e k e n n z e i c h n e t  d u r c h  eine zickzackförmig gefaltete, wenigstens halbsteife Folie (1), die an
ihren Rändern in jedem zwischen zwei aufeinanderfolgenden
Falzen (2) liegenden Streifen (3, 4, 5) Löcher (8) aufweist,
die nach Zusammenschieben der Folie (1) zu einem Paket (10)
miteinander fluchten und durch die Drähte (9) verlaufen, die
nach Spannen unterhalb eines Daches eines Gewächshauses die
gefaltete Folie verschiebbar halten und führen.

2. Vorrichtung nach Anspruch 1, d a d u r c h  g e k e n n -
z e i c h n e t,  daß die Folie (1) ein halbsteifes Faservlies
ist.

3. Vorrichtung nach Anspruch 1, d a d u r c h  g e k e n n -
z e i c h n e t,  daß die Folie ein Muster von feinverteilten
Stellen aufweist, an denen die Lichtdurchlässigkeit größer ist
als in Bereichen außerhalb der Stellen.

4. Vorrichtung nach Anspruch 3, d a d u r c h  g e k e n n -
z e i c h n e t,  daß die lichtdurchlässigen Stellen durch
Perforationen gebildet sind.

5. Vorrichtung nach Anspruch 1, d a d u r c h  g e k e n n -

SL/K                                              -2-

z e i c h n e t ,  daß die Drähte (9) horizontal verlaufen.

6. Vorrichtung nach Anspruch 1, d a d u r c h  g e k e n n -
z e i c h n e t ,  daß durch die Löcher (8) Zugfäden (11) verlaufen, die fest mit einem parallel zu den Falzen (2) verlaufenden Rand der Folie (1) verbunden sind.

7. Vorrichtung nach Anspruch 1, d a d u r c h  g e k e n n -
z e i c h n e t ,  daß wenigstens einer der parallel zu den
Falzen verlaufenden Ränder der Folie (1) eine steife Schiene
(6) aufweist.

1/1

FIG. 1

FIG. 2